# FASCICULE DE BREVET EUROPEEN

(11) **EP 3 086 954 B1**
(45) Date de publication et mention de la délivrance du brevet: **10.04.2019**
(21) Numéro de dépôt: 14808558.2
(22) Date de dépôt: 27.11.2014
(51) Int. Cl.: B60C 9/11, B60C 15/00, B60C 15/06, B60C 9/18

(54) **PNEUMATIQUE COMPRENANT UN TRICOT**
REIFEN MIT EINEM TRIKOT
TIRE COMPRISING A KNITTED FABRIC

(30) Priorité: 26.12.2013 FR 1363594
(43) Date de publication de la demande: 02.11.2016
(73) Titulaire: Compagnie Générale des Etablissements Michelin, 63000 Clermont-Ferrand (FR)
(72) Inventeur: LE CLERC, Christophe, F-63040 Clermont-Ferrand Cedex 9 (FR); CORNILLE, Richard, F-63040 Clermont-Ferrand Cedex 9 (FR); PINEAU, Geneviève, F-63040 Clermont-Ferrand Cedex 9 (FR); LEGRAND, Xavier, F-59056 Roubaix (FR); OSTYN, Hubert, F-59056 Roubaix (FR); COLOT, Marc-Antoine, F-59056 Roubaix (FR); TANCHAUD, Guillaume, F-59056 Roubaix (FR)
(74) Mandataire: Desbordes, Guillaume
(86) Numéro de dépôt international: PCT/EP2014/075757
(87) Numéro de publication internationale: WO 2015/096950

(56) Documents cités:
- DE-A1- 1 505 093
- DE-C- 736 014
- DE-C- 738 261
- US-A- 2 947 340
- US-A- 3 460 599

## Description

L'invention a pour objet un pneumatique comprenant un tricot ainsi qu'un procédé de fabrication d'un tel pneumatique.

L'invention s'applique à tout type de véhicule mais est préférentiellement destinée à des véhicules de tourisme, des véhicules à deux roues tels qu'un motocycle ou un vélo, des véhicules industriels choisis parmi des camionnettes, véhicules lourds tels que "Poids lourd" - i.e., métro, bus, engins de transport routier (camions, tracteurs, remorques), véhicules hors-la-route -, engins agricoles ou de génie civil, aéronef, autres véhicules de transport ou de manutention.

On connait de l'état de la technique un pneumatique pour véhicule de tourisme comprenant une armature de carcasse ancrée dans deux bourrelets et surmontée radialement par un sommet comprenant une armature de sommet et une bande de roulement, cette dernière étant réunie aux bourrelets par deux flancs.

Le document DE 1505093 décrit un pneumatique selon le préambule de la revendication 1.

Un objectif constant des manufacturiers de pneumatique est d'augmenter la rigidité de dérive du pneumatique afin d'améliorer le comportement routier (« handling ») des pneumatiques, en particulier lors des fortes sollicitations en virage. A cet effet, plusieurs solutions ont été mises en oeuvre.

Une première solution consiste à munir le pneumatique d'une armature de carcasse comprenant deux nappes de carcasse. Une deuxième solution consiste à augmenter l'épaisseur des flancs. Toutefois, la rigidité de dérive du pneumatique utilisant la première solution reste perfectible et la masse du pneumatique utilisant la deuxième solution est relativement élevée.

L'invention a pour but un pneumatique présentant un meilleur compromis de rigidité de dérive sous fortes sollicitations et de masse que les pneumatiques utilisant les première et deuxième solutions décrites ci-dessus

A cet effet, l'invention a pour objet un pneumatique selon la revendication 1.

Par définition un tricot est un élément de renfort comprenant des mailles. Chaque maille comprend une boucle entrelacée avec une autre boucle. Ainsi, on distingue un tricot qui est un textile à mailles d'un tissu qui est un textile comprenant des fils de trame et des fils de chaine, les fils de trame étant sensiblement parallèles les uns aux autres et les fils de chaine étant également sensiblement parallèles les uns aux autres.

On distingue le tricot à mailles cueillies (ou tricot trame) et le tricot à mailles jetées (ou tricot chaîne). Dans le tricot à mailles cueillies, les mailles sont formées essentiellement dans la direction selon laquelle les boucles d'une même rangée sont agencées les unes à côtés des autres (selon la largeur du tricot). Dans le tricot à mailles jetées, les mailles sont formées essentiellement dans la direction selon laquelle les boucles d'une même colonne sont agencées les unes à côtés des autres (selon la longueur du tricot).

Différentes contextures existent. Par contexture, on entend le mode d'entrelacement des fils formant un motif répétitif sur le tricot. Parmi ces contextures, et sans que celles-ci soient limitatives, on citera le jersey, le jersey piqué, la côte 1*1, la côte anglaise, la côte interlockée, la côte perlée pour les tricots à mailles cueillies et la charmeuse, l'atlas pour les tricots à mailles jetées.

Grâce au tricot, le pneumatique selon l'invention présente une rigidité de dérive supérieure à celle des pneumatiques des première et deuxième solutions tout en étant plus léger comme le démontre les résultats des tests comparatifs décrits ci-dessous.

La norme ISO 13934-1 :2013 indique comment obtenir la courbe force-allongement d'un tricot du pneumatique selon l'invention. La norme indique précisément comment déterminer, à partir de cette courbe force-allongement, l'allongement à la rupture et la force maximale, notamment le nombre d'essais, le calcul et l'expression des résultats relatifs à ces grandeurs. L'homme du métier saura tout aussi bien, à partir de cette courbe force-allongement, déterminer les forces à 100%, 50%, 10% d'allongement, calculer et exprimer les résultats relatifs à ces grandeurs d'une façon identique. En particulier, on a réalisé la courbe force-allongement sur des éprouvettes ayant une largeur égale à 50 mm ± 0,5 mm et une longueur permettant une longueur d'essai égale à 100 mm ± 1 mm.

La matrice d'élastomère standard est une composition présentant un module apparent MA100 à 100% d'allongement (c'est-à-dire calculé par rapport à la section initiale de l'éprouvette), mesuré selon la norme ASTM D412-1998, éprouvette « C », égal à 1,6 MPa ± 0,2 MPa, c'est-à-dire allant de 1,4 à 1,8 MPa. La norme ISO 13934-1:2013 indique que l'on doit effectuer des mesures sur 2 jeux d'au moins 5 éprouvettes. Chaque éprouvette est fabriquée en interposant un tricot prélevé dans l'étoffe entre deux couches constituées de la matrice d'élastomère standard. Chaque couche présente une épaisseur sensiblement égale à 0,4 mm. L'éprouvette alors formée par le tricot et les deux couches est cuite pendant 15 min à 160°C sous une pression de 2,4 bars.

Afin d'atteindre ces propriétés (décrites ci-dessous et ci-dessus), l'homme du métier saura faire varier certains paramètres du tricot comme la contexture et certains paramètres du procédé de fabrication du tricot comme le type de métier utilisé, la jauge du métier et la serre dans le cas des mailles cueillies.

Selon d'autres caractéristiques préférées du pneumatique :
- Le tricot présente, selon la direction générale principale et/ou la direction générale transverse, une force à 100% d'allongement supérieure ou égale à 300 N, de préférence 400 N et plus préférentiellement 500 N, la force à 100% d'allongement étant déterminée à partir d'une courbe force-allongement obtenue en appliquant la norme ISO 13934-1:2013 au tricot noyé dans une matrice d'élastomère standard.
- Le tricot présente, selon la direction générale principale et/ou la direction générale transverse, une force à 100% d'allongement inférieure ou égale à 2000 N, de préférence 1750 N et plus préférentiellement 1600 N, la force à 100% d'allongement étant déterminée à partir d'une courbe force-allongement obtenue en appliquant la norme ISO 13934-1:2013 au tricot noyé dans une matrice d'élastomère standard.

Selon d'autres caractéristiques préférées du pneumatique :
- Le tricot présente, selon la direction générale principale et/ou la direction générale transverse, une force à 50% d'allongement supérieure ou égale à 170 N, de préférence 300 N, la force à 50% d'allongement étant déterminée à partir d'une courbe force-allongement obtenue en appliquant la norme ISO 13934-1:2013 au tricot noyé dans une matrice d'élastomère standard.
- Le tricot présente, selon la direction générale principale et/ou la direction générale transverse, une force à 50% d'allongement inférieure ou égale à 1500 N, de préférence 1200 N, la force à 50% d'allongement étant déterminée à partir d'une courbe force-allongement obtenue en appliquant la norme ISO 13934-1:2013 au tricot noyé dans une matrice d'élastomère standard.

Selon d'autres caractéristiques optionnelles du pneumatique :
- Le tricot présente, selon la direction générale principale et/ou la direction générale transverse, une force à 10% d'allongement supérieure ou égale à 60 N, de préférence 80 N, la force à 10% d'allongement étant déterminée à partir d'une courbe force-allongement obtenue en appliquant la norme ISO 13934-1:2013 au tricot noyé dans une matrice d'élastomère standard.
- Le tricot présente, selon la direction générale principale et/ou la direction générale transverse, une force à 10% d'allongement inférieure ou égale à 700 N, de préférence 600 N, la force à 10% d'allongement étant déterminée à partir d'une courbe force-allongement obtenue en appliquant la norme ISO 13934-1:2013 au tricot noyé dans une matrice d'élastomère standard.

Selon d'autres caractéristiques préférées du pneumatique :
- Le tricot présente, selon la direction générale principale et/ou la direction générale transverse, une force maximale supérieure ou égale à 800 N, la force maximale étant mesurée selon la norme ISO 13934-1:2013 appliquée au tricot noyé dans une matrice d'élastomère standard.
- Le tricot présente, selon la direction générale principale et/ou la direction générale transverse, une force maximale inférieure ou égale à 4900 N, la force maximale étant mesurée selon la norme ISO 13934-1:2013 appliquée au tricot noyé dans une matrice d'élastomère standard.

Selon d'autres caractéristiques préférées du pneumatique :
- Le tricot présente, selon la direction générale principale et/ou la direction générale transverse, un allongement à la rupture supérieur ou égal à 30%, de préférence 100 %. l'allongement à la rupture étant mesuré selon la norme ISO 13934-1:2013 appliquée au tricot noyé dans une matrice d'élastomère standard. Un tel allongement à la rupture est largement supérieur à un tissu classique dont l'allongement à la rupture est de l'ordre de 10% à 15%. Un tel allongement permet au tricot de se déformer suffisamment même lors de sollicitations extrêmes en virage.
- Le tricot présente, selon la direction générale principale et/ou la direction générale transverse, un allongement à la rupture inférieur ou égal à 550 %, de préférence 500 %, l'allongement à la rupture étant mesuré selon la norme ISO 13934-1:2013 appliquée au tricot noyé dans une matrice d'élastomère standard.

Avantageusement, les caractéristiques décrites ci-dessus (force à 100%, 50% et 10% d'allongement, force maximale et allongement à la rupture) sont observables selon la direction générale principale et/ou la direction générale transverse. Dans une variante, elles sont observables uniquement selon la direction générale principale. Dans une autre variante, elles sont observables uniquement selon la direction générale transverse. Enfin, dans une dernière variante, elles sont observables selon la direction générale principale et la direction générale transverse.

De préférence, la direction générale transverse du tricot est sensiblement parallèle à la direction circonférentielle du pneumatique.

De préférence, la direction générale principale du tricot est sensiblement parallèle à la direction radiale du pneumatique.

De préférence, la force à 100 % d'allongement du tricot selon la direction principale est supérieure à la force à 100 % d'allongement du tricot selon la direction générale transverse, les forces à 100 % d'allongement étant déterminée à partir d'une courbe force-allongement obtenue en appliquant la norme ISO 13934-1:2013 au tricot noyé dans une matrice d'élastomère standard.

Selon d'autres caractéristiques préférées du pneumatique :
- la force à 100 % d'allongement du tricot selon la direction principale, déterminée à partir d'une courbe force-allongement obtenue en appliquant la norme ISO 13934-1:2013 au tricot noyé dans une matrice d'élastomère standard, est supérieure ou égale à 250 N, de préférence 700 N et plus préférentiellement 1000 N, et
- la force à 100 % d'allongement du tricot selon la direction transverse, déterminée à partir d'une courbe force-allongement obtenue en appliquant la norme ISO 13934-1:2013 au tricot noyé dans une matrice d'élastomère standard, est supérieure ou égale à 120 N, de préférence 500 N.

Selon d'autres caractéristiques préférées du pneumatique :
- la force à 50 % d'allongement du tricot selon la direction principale, déterminée à partir d'une courbe force-allongement obtenue en appliquant la norme ISO 13934-1:2013 au tricot noyé dans une matrice d'élastomère standard, est supérieure ou égale à 170 N, de préférence 500 N, et
- la force à 50 % d'allongement du tricot selon la direction transverse, déterminée à partir d'une courbe force-allongement obtenue en appliquant la norme ISO 13934-1:2013 au tricot noyé dans une matrice d'élastomère standard, est supérieure ou égale à 80 N, de préférence 300 N.

Selon d'autres caractéristiques préférées du pneumatique :
- la force à 10 % d'allongement du tricot selon la direction principale, déterminée à partir d'une courbe force-allongement obtenue en appliquant la norme ISO 13934-1:2013 au tricot noyé dans une matrice d'élastomère standard, est supérieure ou égale à 170 N, de préférence 280 N, et
- la force à 10 % d'allongement du tricot selon la direction transverse, déterminée à partir d'une courbe force-allongement obtenue en appliquant la norme ISO 13934-1:2013 au tricot noyé dans une matrice d'élastomère standard, est supérieure ou égale à 80 N, de préférence 100 N.

Selon d'autres caractéristiques préférées du pneumatique :
- l'allongement à la rupture du tricot selon la direction principale mesuré selon la norme ISO 13934-1:2013 appliquée au tricot noyé dans une matrice d'élastomère standard est inférieur ou égal à 550 %, de préférence 500 %, et
- l'allongement à la rupture du tricot selon la direction transverse mesuré selon la norme ISO 13934-1:2013 appliquée au tricot noyé dans une matrice d'élastomère standard est inférieur ou égal à 1000 %, de préférence 320 %.

Selon d'autres caractéristiques préférées du pneumatique :
- l'allongement à la rupture du tricot selon la direction principale mesuré selon la norme ISO 13934-1:2013 appliquée au tricot noyé dans une matrice d'élastomère standard est supérieur ou égal à 100 %, et
- l'allongement à la rupture du tricot selon la direction transverse mesuré selon la norme ISO 13934-1:2013 appliquée au tricot noyé dans une matrice d'élastomère standard est supérieur ou égal à 160 %.

Selon d'autres caractéristiques préférées du pneumatique :
- la force maximale du tricot selon la direction principale mesurée selon la norme ISO 13934-1:2013 appliquée au tricot noyé dans une matrice d'élastomère standard est supérieure ou égale à 1800 N, et
- la force maximale du tricot selon la direction transverse mesurée selon la norme ISO 13934-1:2013 appliquée au tricot noyé dans une matrice d'élastomère standard est supérieure ou égale à 800 N.

Selon d'autres caractéristiques préférées du pneumatique :
- la force maximale du tricot selon la direction principale mesurée selon la norme ISO 13934-1:2013 appliquée au tricot noyé dans une matrice d'élastomère standard est inférieure ou égale à 4900 N, et
- la force maximale du tricot selon la direction transverse mesurée selon la norme ISO 13934-1:2013 appliquée au tricot noyé dans une matrice d'élastomère standard est inférieure ou égale à 3200 N.

Avantageusement, les directions principale et transverse font, l'une par rapport à l'autre, un angle compris entre 75° et 105°, de préférence entre 85° et 95°.

Dans un mode de réalisation, la densité surfacique de mailles du tricot, mesurée selon la norme NF EN 14971, est inférieure ou égale à 400 mailles.cm⁻², de préférence à 100 mailles.cm⁻² et plus préférentiellement à 50 mailles.cm⁻².

Dans un mode de réalisation, la densité surfacique de mailles du tricot, mesurée selon la norme NF EN 14971, est supérieure ou égale à 5 mailles.cm⁻², de préférence à 10 mailles.cm⁻² et plus préférentiellement à 15 mailles.cm⁻².

De préférence, le tricot est constitué d'un ou de plusieurs éléments filaires d'un matériau non élastomérique.

Avantageusement, le ou chaque matériau non élastomérique est choisi parmi un polyester, un polyamide, une polycétone, un alcool polyvinylique, une cellulose, une fibre minérale, une fibre naturelle ou un mélange de ces matériaux.

Parmi les polyesters, on citera le polyéthylène téréphtalate (PET), le polyéthylène naphthalate (PEN), le polybutylène téréphthalate (PBT), le polybutylène naphthalate (PBN), le polypropylène téréphthalate (PPT) ou le polypropylène naphthalate (PPN). Parmi les polyamides, on citera un polyamide aliphatique comme le nylon ou un polyamide aromatique comme l'aramide. Parmi les alcools polyvinyliques, on citera le Kuralon®. Parmi les celluloses, on citera la rayonne. Parmi les fibres minérales, on citera les fibres de verre et de carbone. Parmi les fibres naturelles, on citera les fibres de chanvre ou de lin.

Avantageusement, le ou chaque élément filaire comprend au moins un brin multifilamentaire comprenant plusieurs monofilaments élémentaires.

Dans une variante dans laquelle le tricot comprend une pluralité de brins multifilamentaires, tous les brins multifilamentaires sont réalisés dans un même matériau. Dans une autre variante dans laquelle le tricot comprend une pluralité de brins multifilamentaires, les brins multifilamentaires sont réalisés dans au moins deux matériaux différents.

Dans un mode de réalisation, chaque élément filaire comprend un unique brin multifilamentaire appelé surtors comprenant plusieurs monofilaments élémentaires.

Dans un autre mode de réalisation, chaque élément filaire comprend plusieurs brins multifilamentaires, chacun appelé surtors, comprenant chacun plusieurs monofilaments élémentaires et assemblés ensemble en hélice pour former un retors.

De préférence, chaque élément filaire présente une ténacité supérieure ou égale à 30 cN.dtex⁻¹. Par exemple, des éléments filaires en PET présentent une de l'ordre de 70 cN.dtex⁻¹ et des éléments filaires en aramide présentent une ténacité de l'ordre de 200 cN.dtex⁻¹.

Avantageusement, chaque brin multifilamentaire comprend entre 2 et 2000 monofilaments élémentaires, de préférence entre 50 et 1000 monofilaments élémentaires.

Avantageusement, le diamètre de chaque monofilament élémentaire va de 10 µm à 100 µm, de préférence de 10 µm à 50 µm et plus préférentiellement de 12 µm à 30 µm. Un tel diamètre permet d'obtenir un tricot relativement flexible et donc compatible avec son utilisation en pneumatique.

Dans un autre mode de réalisation, chaque élément filaire comprend, de préférence est constitué de, un unique monofilament.

De préférence, le tricot est revêtu d'une couche d'une colle d'adhésion. La colle utilisée est par exemple du type RFL (Résorcinol-Formaldéhyde-Latex) ou par exemple, telle que décrite dans les publications WO2013017421, WO2013017422, WO2013017423.

Dans le pneumatique, le tricot est préférentiellement noyé dans une matrice d'élastomère. Par matrice d'élastomère (ou de caoutchouc, les deux termes étant synonymes), on entend une matrice comprenant au moins un élastomère.

De préférence, l'élastomère est un élastomère diénique. De manière connue, les élastomères diéniques peuvent être classés dans deux catégories: "essentiellement insaturés" ou "essentiellement saturés". On entend par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur a 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Bien qu'elle soit applicable à tout type d'élastomère diénique, la présente invention est préférentiellement mise en oeuvre avec un élastomère diénique du type fortement insaturé.

Cet élastomère diénique est plus préférentiellement choisi dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères, de tels copolymères étant notamment choisis dans le groupe constitué par les copolymères de butadiène-styrène (SBR), les copolymères d'isoprène-butadiène (BIR), les copolymères d'isoprène- styrène (SIR) et les copolymères d'isoprène-butadiène-styrène (SBIR).

Un mode de réalisation particulièrement préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Selon un mode de réalisation préférentiel, chaque couche de composition de caoutchouc comporte 50 à 100 pce de caoutchouc naturel. Selon d'autres modes de réalisation préférentiels, l'élastomère diénique peut être constitué, en tout ou partie, d'un autre élastomère diénique tel que, par exemple, un élastomère SBR utilisé en coupage ou non avec un autre élastomère, par exemple du type BR.

La matrice d'élastomère peut contenir un seul ou plusieurs élastomère(s) diénique(s), ce(s) dernier(s) pouvant être utilisé(s) en association avec tout type d'élastomère synthétique autre que diénique, voire avec des polymères autres que des élastomères. La composition de caoutchouc peut comporter également tout ou partie des additifs habituellement utilisés dans les matrices de caoutchouc destinées à la fabrication de pneumatiques, tels que par exemple des charges renforçantes comme le noir de carbone ou la silice, des agents de couplage, des agents anti-vieillissement, des antioxydants, des agents plastifiants ou des huiles d'extension, que ces derniers soient de nature aromatique ou non-aromatique (notamment des huiles très faiblement ou non aromatiques, par exemple du type naphténiques ou paraffiniques, à haute ou de préférence à basse viscosité, des huiles MES ou TDAE), des résines plastifiantes à haute Tg supérieure à 300°C, des agents facilitant la mise en oeuvre (processabilite) des compositions à l'état cru, des résines tackifiantes, des agents anti-réversion, des accepteurs et donneurs de méthylène tels que par exemple HMT (hexamethylènetétramine) ou H3M (hexaméthoxyméthylmélamine), des résines renforçantes (tels que résorcinol ou bismaleimide), des systèmes promoteurs d'adhésion connus du type sels métalliques par exemple, notamment sels de cobalt, de nickel ou de lanthanide, un système de réticulation ou de vulcanisation.

De préférence, le système de réticulation de la matrice d'élastomère est un système dit de vulcanisation, c'est-à-dire a base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, l'accélérateur primaire de vulcanisation, par exemple un sulfénamide, est utilisé à un taux préférentiel compris entre 0,5 et 10 pce. Le taux de charge renforçante, par exemple du noir de carbone ou de la silice, est de préférence supérieur à 50 pce, notamment compris entre 50 et 150 pce.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme silices conviennent notamment les silices précipitées ou pyrogenées présentant une surface BET inférieure a 450 m²/g, de préférence de 30 à 400 m²/g.

L'homme de l'art saura, à la lumière de la présente description, ajuster la formulation de la composition de caoutchouc afin d'atteindre les niveaux de propriétés (notamment module d'élasticité) souhaités, et adapter la formulation à l'application spécifique envisagée.

De préférence, la matrice d'élastomère présente, à l'état réticulé, un module sécant en extension, à 10% d'allongement, qui est compris entre 4 et 80 MPa, plus préférentiellement entre 4 et 20 MPa. Les mesures de module sont effectuées en traction, sauf indication différente, selon la norme ASTM D 412 de 1998 (éprouvette "C") : on mesure en seconde élongation (c'est-à-dire après un cycle d'accommodation) le module sécant "vrai" (c'est-à-dire ramené à la section réelle de l'éprouvette) à 10% d'allongement, noté ici Ms et exprime en MPa (conditions normales de température et d'hygrométrie selon la norme ASTM D 1349 de 1999).

Dans un mode de réalisation, le pneumatique est pour des véhicules industriels choisis parmi des camionnettes, véhicules lourds tels que "Poids lourd" - i.e., métro, bus, engins de transport routier (camions, tracteurs, remorques), véhicules hors-la-route -, engins agricoles ou de génie civil, aéronef, autres véhicules de transport ou de manutention. Dans un autre mode de réalisation, le pneumatique est pour véhicule de tourisme. Dans encore un autre mode de réalisation, le pneumatique est pour un véhicule deux roues.

Selon l'invention le pneumatique comprend une armature de carcasse ancrée dans deux bourrelets et surmontée radialement par une armature de sommet elle-même surmontée d'une bande de roulement qui est réunie aux bourrelets par deux flancs, chaque flanc comprenant le tricot.

En positionnant le tricot dans le flanc, on améliore la rigidité de dérive du pneumatique.

Selon l'invention l'extrémité radialement extérieure du tricot est axialement intérieure par rapport à l'extrémité axialement extérieure de la nappe de sommet radialement adjacente au tricot.

Dans un mode de réalisation encore plus préféré, la distance axiale entre l'extrémité radialement extérieure du tricot et l'extrémité axialement extérieure d'une nappe de sommet radialement adjacente au tricot est supérieure ou égale à 5 mm, de préférence à 10 mm et plus préférentiellement à 15 mm.

Dans un mode de réalisation préféré, l'extrémité radialement extérieure du tricot est radialement intercalée entre l'armature de carcasse et l'armature de sommet. En variante, l'extrémité radialement extérieure du tricot est radialement extérieure par rapport à l'armature de sommet.

Dans certains modes de réalisation, l'armature de carcasse est ancrée dans chaque bourrelet par un retournement autour d'une structure annulaire du bourrelet de manière à former un brin aller et un brin retour.

Dans un mode de réalisation particulièrement préféré, la distance radiale entre l'extrémité radialement intérieure du tricot et le plan radialement médian de la structure annulaire du bourrelet est inférieure ou égale à 15 mm, de préférence à 10 mm et plus préférentiellement à 5 mm. Ainsi, dans le cas d'un pincement du flanc contre la jante, le tricot peut éviter une dégradation de l'armature de carcasse. Le plan radialement médian est le plan séparant la structure annulaire en deux parties présentant un encombrement égal selon la direction radiale.

Dans une première variante, le tricot s'étend, dans le bourrelet, axialement entre le brin aller et le brin retour de l'armature de carcasse.

Dans une deuxième variante, le tricot s'étend, dans le bourrelet, axialement à l'extérieur du brin retour.

Dans d'autres modes de réalisation, le tricot est agencé axialement à l'intérieur de l'armature de carcasse.

Dans un mode de réalisation préféré, le tricot forme un anneau monolithique présentant un axe de révolution sensiblement parallèle à l'axe du pneumatique.

Par anneau monolithique, on entend que chaque maille du tricot est assemblée avec au moins une autre maille du tricot. Ainsi, dans un anneau monolithique, il n'existe pas de recouvrement entre deux extrémités du tricot. Un tel anneau permet de simplifier le procédé de fabrication du pneumatique.

L'invention a également pour objet l'utilisation d'un tricot comprenant :
- des colonnes de boucles, les boucles d'une même colonne étant agencées les unes à la suite des autres sensiblement selon une direction générale dite principale,
- des rangées de boucles, les boucles d'une même rangée étant agencées les unes à côtés des autres sensiblement selon une direction générale dite transverse,
   le tricot présentant, selon la direction générale principale et/ou la direction générale transverse, une force à 100 % d'allongement supérieure ou égale à 250 N, la force à 100% d'allongement étant déterminée à partir d'une courbe force-allongement obtenue en appliquant la norme ISO 13934-1:2013 au tricot noyé dans une matrice d'élastomère standard en tant qu'élément de renfort d'un pneumatique.

L'invention a pour autre objet un procédé de fabrication d'un pneumatique tel que défini ci-dessus, dans lequel on noie le tricot dans une matrice d'élastomère.

L'invention sera mieux comprise à la lecture de la description qui va suivre, donnée uniquement à titre d'exemple non limitatif et faite en se référant aux dessins dans lesquels:
- la figure 1 est une vue en coupe d'un pneumatique selon un premier mode de réalisation de l'invention comprenant au moins un tricot;
- la figure 2 est une vue schématique du développé du pneumatique de la figure 1 illustrant la répartition axiale des tricots;
- la figure 3 est une vue des détails d'un tricot du pneumatique de la figure 1 ;
- la figure 4 est un graphique illustrant des courbes force-allongement du tricot des figures 1 à 3 et d'un tricot de l'état de la technique ;
- les figures 5 et 6 sont des vues analogues respectivement à celles des figures 1, 2 d'un pneumatique selon un deuxième mode de réalisation ;
- les figures 7 et 8 sont des vues analogues respectivement à celles des figures 1, 2 d'un pneumatiques selon un troisième mode de réalisation qui n'est pas selon l'invention ;
- les figures 9 et 10 sont des vues analogues respectivement à celles des figures 1, 2 d'un pneumatiques selon un quatrième mode de réalisation ;
- les figures 11 et 12 sont des vues analogues respectivement à celles des figures 1, 2 d'un pneumatiques selon un cinquième mode de réalisation qui n'est pas selon l'invention, et
- les figures 13 et 14 sont des vues analogues respectivement à celles des figures 1, 2 d'un pneumatiques selon un sixième mode de réalisation.

Dans la description suivante, dans l'emploi du terme « radial », il convient de distinguer plusieurs utilisations différentes du mot par la personne du métier. Premièrement, l'expression se réfère à un rayon du pneumatique. C'est dans ce sens qu'on dit d'un point A qu'il est « radialement intérieur » à un point B (ou « radialement à l'intérieur » du point B) s'il est plus près de l'axe de rotation du pneumatique que le point B. Inversement, un point C est dit « radialement extérieur à » un point D (ou « radialement à l'extérieur » du point D) s'il est plus éloigné de l'axe de rotation du pneumatique que le point D. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

En revanche, un élément de renfort ou une armature est dit « radial » lorsque l'élément de renfort ou les éléments de renfort de l'armature font avec la direction circonférentielle un angle supérieur ou égal à 65° et inférieur ou égal à 90°.

Une direction « axiale » est une direction parallèle à l'axe de rotation du pneumatique. Un point E est dit « axialement intérieur » à un point F (ou «axialement à l'intérieur » du point F) s'il est plus près du plan médian du pneumatique que le point F. Inversement, un point G est dit « axialement extérieur à » un point H (ou « axialement à l'extérieur » du point H) s'il est plus éloigné du plan médian du pneumatique que le point H.

Le « plan médian » M du pneumatique est le plan qui est normal à l'axe de rotation du pneumatique et qui se situe à équidistance des structures annulaires de renfort de chaque bourrelet.

Une direction « circonférentielle » est une direction qui est perpendiculaire à la fois à un rayon du pneumatique et à la direction axiale.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

### EXEMPLES DE PNEUMATIQUES SELON L'INVENTION

Dans les figures, on a représenté un repère X, Y, Z correspondant aux directions habituelles respectivement axiale (X), radiale (Y) et circonférentielle (Z) d'un pneumatique.

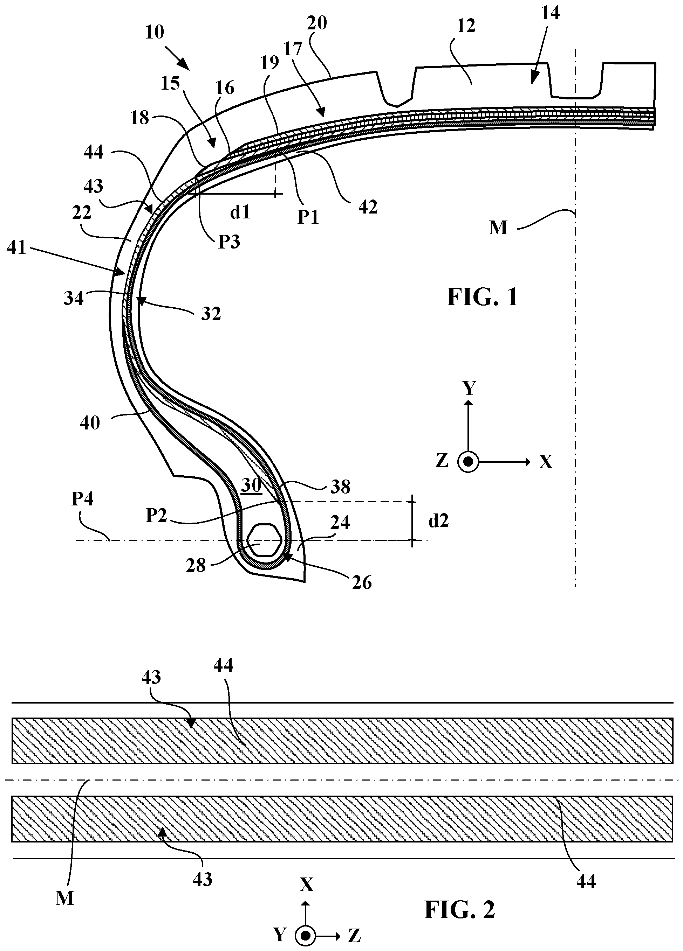

On a représenté sur les figures 1 et 2 un pneumatique conforme à un premier mode de réalisation de l'invention et désigné par la référence générale 10 (Il formera le pneumatique 10₁ des essais comparatifs ci-dessous). Le pneumatique 10 est sensiblement de révolution autour de l'axe X. Le pneumatique 10 est ici destiné à un véhicule de tourisme.

Le pneumatique 10 comporte un sommet 12 comprenant une armature de sommet 14 comprenant une armature de travail 15 comprenant deux nappes de travail 16, 18 d'éléments de renfort et une armature 17 de protection ou de frettage comprenant une nappe de protection 19. L'armature de sommet 14 est surmontée d'une bande de roulement 20. Ici, l'armature de protection 17, ici la nappe de protection 19, est intercalée radialement entre l'armature de travail 15 et la bande de roulement 20.

Deux flancs 22 prolongent le sommet 12 radialement vers l'intérieur. Le pneumatique 10 comporte en outre deux bourrelets 24 radialement intérieurs aux flancs 22 et comportant chacun une structure annulaire de renfort 26, en l'occurrence une tringle 28, surmontée d'un masse de gomme 30 de bourrage, ainsi qu'une armature de carcasse radiale 32. L'armature de carcasse 32 est surmontée radialement par l'armature de sommet 14.

L'armature de carcasse 32 comporte de préférence une seule nappe de carcasse 34 d'éléments de renfort textiles radiaux, la nappe 34 étant ancrée à chacun des bourrelets 24 par un retournement autour de la tringle 28 de manière à former dans chaque bourrelet 24 un brin aller 38 s'étendant depuis les bourrelets 24 à travers les flancs 22 vers le sommet 12, et un brin retour 40, l'extrémité radialement extérieure du brin retour 40 étant, ici sensiblement à mi-hauteur du pneumatique 10. L'armature de carcasse 32 s'étend ainsi depuis les bourrelets 24 à travers les flancs 22 vers le sommet 12. En variante, les éléments de renfort radiaux sont métalliques. Le pneumatique 10 comprend également une nappe intérieure d'étanchéité 42, généralement en butyl, agencée axialement et radialement à l'intérieure de l'armature de carcasse 32.

Les nappes de travail 16, 18 comprennent des éléments de renfort métalliques ou textiles classiques pour l'homme du métier et formant un angle allant de 15° et 40°, de préférence allant de 20° à 30° et ici égal à 26° avec la direction circonférentielle Z du pneumatique. Les éléments de renfort des nappes de travail sont croisés d'une nappe de travail par rapport à l'autre.

La nappe de protection 19 comprend des éléments de renfort métalliques ou textiles également classiques pour l'homme du métier formant un angle allant de 0° à 10° avec la direction circonférentielle Z du pneumatique.

En outre, le pneumatique comprend une armature additionnelle 41 comprenant au moins une nappe additionnelle 43. Chaque nappe additionnelle 43 comprend au moins un tricot 44. La nappe additionnelle 43 et ici le tricot 44 sont agencés axialement à l'extérieur de l'armature de carcasse 34. Ainsi, comme illustré sur la figure 1, chaque flanc 22 comprend un tricot 44.

L'extrémité radialement extérieure P1 du tricot 44 est axialement intérieure par rapport à l'extrémité axialement extérieure P3 de la nappe de sommet 18 radialement adjacente au tricot 44. En outre, l'extrémité radialement extérieure P1 du tricot 44 est radialement intercalée entre l'armature de carcasse 32 et l'armature de sommet 14.

La distance axiale d1 entre l'extrémité radialement extérieure P1 du tricot 44 et l'extrémité axialement extérieure P3 de la nappe de sommet 18 radialement adjacente au tricot 44 est supérieure ou égale à 5 mm, de préférence à 10 mm. Ici, d1=10 mm. Dans d'autres modes de réalisation, d1 est supérieure ou égale à 15 mm.

Le tricot 44 s'étend, dans le bourrelet, axialement entre le brin aller 38 et le brin retour 40 de l'armature de carcasse 32. En variante, on pourra envisager un mode de réalisation dans lequel le tricot s'étend, dans le bourrelet, axialement à l'extérieur du brin retour 40.

La distance radiale d2 entre l'extrémité radialement intérieure P2 du tricot 44 et le plan radialement médian P4 de la structure annulaire 26 du bourrelet 24 est inférieure ou égale à 15 mm, de préférence à 10 mm et plus préférentiellement à 5 mm. Ici d2=5 mm.

Chaque nappe de travail 16, 18, de protection 19, de carcasse 34 et additionnelle 43 comprend une matrice d'élastomère dans laquelle sont noyés les éléments de renfort de la nappe correspondante. Les compositions des matrices d'élastomère des nappes de travail 16, 18, de protection 19, de carcasse 34 et additionnelle 43 sont des compositions conventionnelles pour calandrage d'éléments de renfort comprenant de façon classique un élastomère diénique, par exemple du caoutchouc naturel, une charge renforçante, par exemple du noir de carbone et/ou de la silice, un système de réticulation, par exemple un système de vulcanisation, de préférence comprenant du soufre, de l'acide stéarique et de l'oxyde de zinc, et éventuellement un accélérateur et/ou un retardateur de vulcanisation et/ou divers additifs.

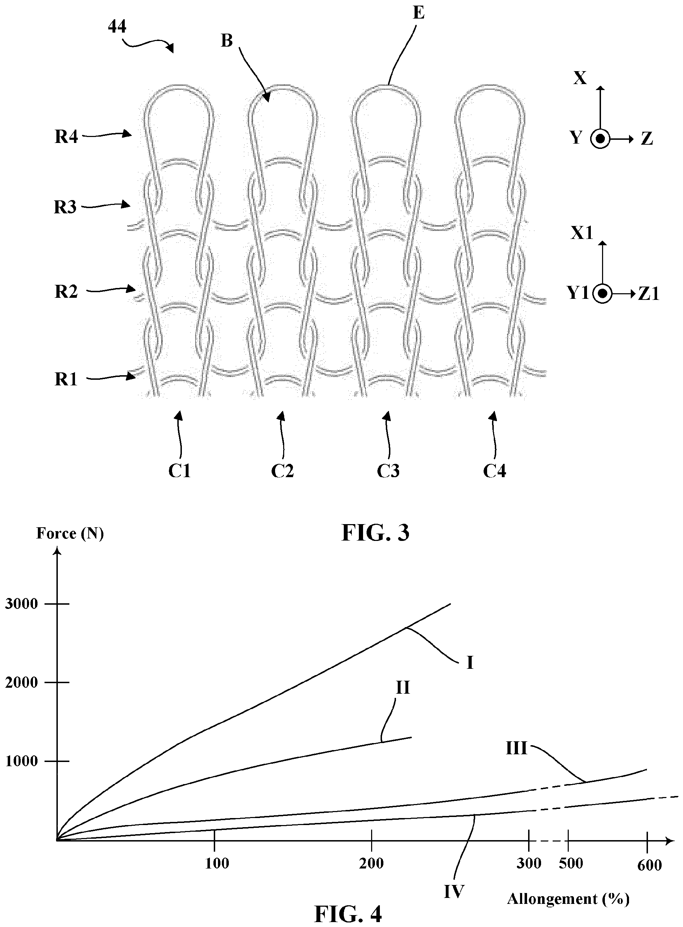

On a représenté sur la figure 3 le tricot 44. Le tricot 44 comprend des colonnes C1, C2, C3, C4 de boucles B ainsi que des rangées R1, R2, R3, R4 de boucles B. Les boucles B d'une même colonne Ci sont agencées les unes à la suite des autres sensiblement selon une direction générale dite principale X1. Les boucles B d'une même rangée Ri sont agencées les unes à côtés des autres sensiblement selon une direction générale dite transverse Z1.

Les directions principale X1 et transverse Z1 font, l'une par rapport à l'autre, un angle compris entre 75° et 105°, de préférence entre 85° et 95°. Ici, Les directions principale X1 et transverse Z1 sont sensiblement perpendiculaires l'une à l'autre.

La direction générale transverse Z1 fait un angle au plus égal à 10° avec la direction circonférentielle Z du pneumatique 10 et ici un angle égal à 0°, la direction générale transverse Z1 du tricot 44 étant sensiblement parallèle à la direction circonférentielle Z du pneumatique. La direction générale principale X1 du tricot 44 est sensiblement parallèle à la direction radiale X du pneumatique.

Le tricot 44 présente une contexture du type jersey et a été fabriqué à façon à partir d'un procédé de tricotage classique pour l'homme du métier de ce domaine. Le tricot 44 présente, selon la direction Y1 une épaisseur allant de 0,7 à 3 mm, de préférence 0,8 à 2,6 mm et ici égal à 1,6 mm..

La densité surfacique de mailles du tricot, mesurée selon la norme NF EN 14971, est inférieure ou égale à 400 mailles.cm⁻², de préférence à 100 mailles.cm⁻² et plus préférentiellement à 50 mailles.cm⁻². La densité surfacique de mailles du tricot est également supérieure ou égale à 5 mailles.cm⁻², de préférence à 10 mailles.cm⁻² et plus préférentiellement à 15 mailles.cm⁻². En l'espèce, la densité surfacique est égale à 26 mailles.cm².

On a représenté sur la figure 4 des courbes force-allongement obtenues en appliquant la norme ISO 13934-1:2013 au tricot noyé dans une matrice d'élastomère standard telle que définie auparavant. Dans cet exemple, la matrice d'élastomère standard comprend un élastomère diénique, une charge renforçante, par exemple du noir de carbone, un système de vulcanisation et les additifs usuels utilisés par l'homme du métier. Les compositions de ces matrices standards sont à la portée de l'homme du métier qui saura les formuler pour obtenir le module apparent MA100 à 100% d'allongement souhaité, ici 1,6 MPa ± 0,2 MPa (ASTM D412-1998, éprouvette « C »). Par ailleurs, le module apparent MA10 à 10% d'allongement de la matrice d'élastomère standard utilisée ici est égal à 3,3 MPa ± 0,5 MPa et le module apparent MA300 à 300% d'allongement de la matrice d'élastomère standard utilisée ici est égal à 1,7 MPa ± 0,3 MPa (ASTM D412-1998, éprouvette « C »).

Les courbes I (direction principale) et II (direction transverse) correspondent au tricot 44 décrit précédemment. Les courbes III (direction principale) et IV (direction transverse) correspondent à un tricot témoin comprenant des éléments filaires réalisés dans un matériau à base d'un mélange de nylon et de Spandex, également connu sous le nom commercial LYCRA. Ce tricot témoin présente une force maximale égale à 899 N, un allongement à la rupture égal à 595%, une force à 100% d'allongement égale à 245 N, une force à 50% d'allongement égale à 161 N et une force à 10% d'allongement égale à 57 N.

Comme on peut le voir sur la figure 4, le tricot 44 présente des propriétés particulières d'allongement à la rupture et de force maximale mesurées selon la norme ISO 13934-1:2013, ainsi que des propriétés de force à 10%, 50% et 100% d'allongement déterminées à partir d'une courbe force-allongement obtenue en appliquant la norme ISO 13934-1:2013.

Le tricot 44 présente, selon la direction générale principale X1 et/ou la direction générale transverse Z1, et ici selon les deux directions X1 et Z1, une force à 100 % d'allongement supérieure ou égale à 250 N, de préférence 300 N, plus préférentiellement 400 N et encore plus préférentiellement 500 N et inférieure ou égale à 2000 N, de préférence 1750 N et plus préférentiellement 1600 N. Lors des fortes sollicitations en virage, le tricot 44 est fortement sollicité. On a observé que, lors des fortes sollicitations en virage, l'allongement du tricot selon la direction circonférentielle du pneumatique 10 est de l'ordre de 100%. Ainsi, lors de ces fortes sollicitations, afin d'obtenir une rigidité de dérive élevée, il est souhaitable que la force du tricot soit relativement élevée, comme c'est le cas pour les courbes I et II au contraire du tricot correspondant aux courbes III et IV. Préférentiellement, la force à 100 % d'allongement selon la direction principale X1 est supérieure ou égale à 250 N, de préférence 700 N et plus préférentiellement 1000 N et la force à 100 % d'allongement selon la direction transverse Z1 est supérieure ou égale à 120 N, de préférence 500 N.

De préférence, le tricot 44 présente, selon la direction générale principale X1 et/ou la direction générale transverse Z1, et ici selon les deux directions X1 et Z1, une force à 50% d'allongement supérieure ou égale à 170 N, de préférence 300 N, et inférieure ou égale à 1500 N, de préférence 1200 N. De préférence, le tricot 44 présente, selon la direction générale principale X1 et/ou la direction générale transverse Z1, et ici selon les deux directions X1 et Z1, une force à 10% d'allongement supérieure ou égale à 60 N, de préférence 80 N, et inférieure ou égale à 700 N, de préférence 600 N. Préférentiellement, la force à 50 % d'allongement selon la direction principale X1 est supérieure ou égale à 170 N, de préférence 500 N et la force à 50 % d'allongement selon la direction transverse Z1 est supérieure ou égale à 80 N, de préférence 300 N. Préférentiellement, la force à 10 % d'allongement selon la direction principale X1 est supérieure ou égale à 170 N, de préférence 280 N et la force à 10 % d'allongement selon la direction transverse Z1 est supérieure ou égale à 80 N, de préférence 100 N.

De préférence, le tricot 44 présente, selon la direction générale principale X1 et/ou la direction générale transverse Z1, et ici selon les deux directions X1 et Z1, une force maximale supérieure ou égale à 800 N et inférieure ou égale à 4900 N. Le tricot 44 correspondant aux courbes I et II présente une résistance mécanique supérieure au tricot correspondant aux courbes III et IV. Cette caractéristique est notamment avantageuse dans le cas de chocs entre le pneumatique et d'éventuels obstacles, connus sous l'appellation anglaise « road hazard ». Préférentiellement, la force maximale selon la direction principale X1 est supérieure ou égale à 1800 N et la force maximale selon la direction transverse Z1 est supérieure ou égale à 800 N. Préférentiellement, la force maximale selon la direction principale X1 est inférieure ou égale à 4900 N, et la force maximale selon la direction transverse Z1 est inférieure ou égale à 3200 N.

De préférence, le tricot 44 présente, selon la direction générale principale X1 et/ou la direction générale transverse Z1, et ici selon les deux directions X1 et Z1, un allongement à la rupture supérieur ou égal à 30%, de préférence 100 % et inférieur ou égal à 550 %, de préférence 500 %. En limitant l'allongement à rupture du tricot 44 correspondant aux courbes I et II, on s'assure que le tricot ne se déformera pas inutilement, la matrice d'élastomère adjacente au tricot risquant, dans tous les cas, de rompre avant le tricot.. Préférentiellement, l'allongement à la rupture selon la direction principale X1 est inférieur ou égal à 550 %, de préférence 500 % et l'allongement à la rupture selon la direction transverse Z1 est inférieur ou égal à 1000 %, de préférence 320 %. Préférentiellement, l'allongement à la rupture selon la direction principale X1 est supérieur ou égal à 100 % et l'allongement à la rupture selon la direction transverse Z1 est supérieur ou égal à 160 %.

On notera que, dans certains modes de réalisation, la force maximale du tricot 44 selon la direction générale principale X1 est supérieure à la force maximale du tricot 44 selon la direction générale transverse Z1.

Le tricot 44 est constitué d'un ou de plusieurs éléments filaires E d'un matériau non élastomérique. Le ou chaque matériau non élastomérique est choisi parmi un polyester, un polyamide, une polycétone, une cellulose, une fibre minérale, une fibre naturelle ou un mélange de ces matériaux.

Le ou chaque élément filaire E comprend au moins un brin multifilamentaire comprenant plusieurs monofilaments élémentaires. En l'espèce, le ou chaque élément filaire E comprend deux brins de nylon chacun de 140 tex surtordus chacun à 250 tours.m⁻¹ dans un premier sens puis retordus en hélice l'un autour de l'autre à 250 tours.m⁻¹ dans un deuxième sens opposé au premier sens.

On va maintenant décrire un procédé de fabrication du pneumatique 10 tel que décrit ci-dessus. On ne décrira que les étapes principales relatives à l'invention, les autres étapes étant facilement réalisables à partir des connaissances générales de l'homme du métier.

Au cours du procédé, on forme une ébauche comprenant les bourrelets 24, les flancs 22 et l'armature de carcasse 32, ici la nappe de carcasse 34.

Dans un premier mode de réalisation du procédé, on noie le tricot 44 dans sa matrice d'élastomère afin d'obtenir la nappe additionnelle 43, par exemple par calandrage du tricot 44 entre deux bandes de la matrice d'élastomère. Puis, on rapporte cette nappe additionnelle 43 sur l'ébauche préalablement formée. Ensuite, on rapporte l'armature de sommet 14 et la bande de roulement 20.

Dans un deuxième mode de réalisation, on rapporte une première bande de la matrice d'élastomère sur l'ébauche. Puis, on rapporte le tricot 44 sur la première bande de la matrice d'élastomère. Ensuite, on rapporte une deuxième bande de la matrice d'élastomère sur le tricot 44. Enfin, on rapporte l'armature de sommet 14 et la bande de roulement 20. Lors de la cuisson de l'ébauche pour former le pneumatique 10, la matrice d'élastomère des première et deuxième bandes flue au travers du tricot 44. Ainsi, on noie le tricot 44 dans sa matrice d'élastomère.

Dans ce deuxième mode de réalisation, le tricot 44 forme un anneau monolithique présentant un axe de révolution. L'anneau est déformable radialement, c'est-à-dire perpendiculairement à son axe de révolution, entre une position au repos et une position déformée. Ainsi, on déforme radialement le tricot 44 depuis son état au repos vers son état déformé, puis on le rapporte axialement autour de l'ébauche dans son étant déformé, puis on relâche le tricot 44 depuis son état déformé de façon à ce que le tricot enserre l'ébauche. Une fois positionné sur l'ébauche, l'axe de révolution de l'anneau monolithique est sensiblement parallèle à, et confondu avec, l'axe du pneumatique.

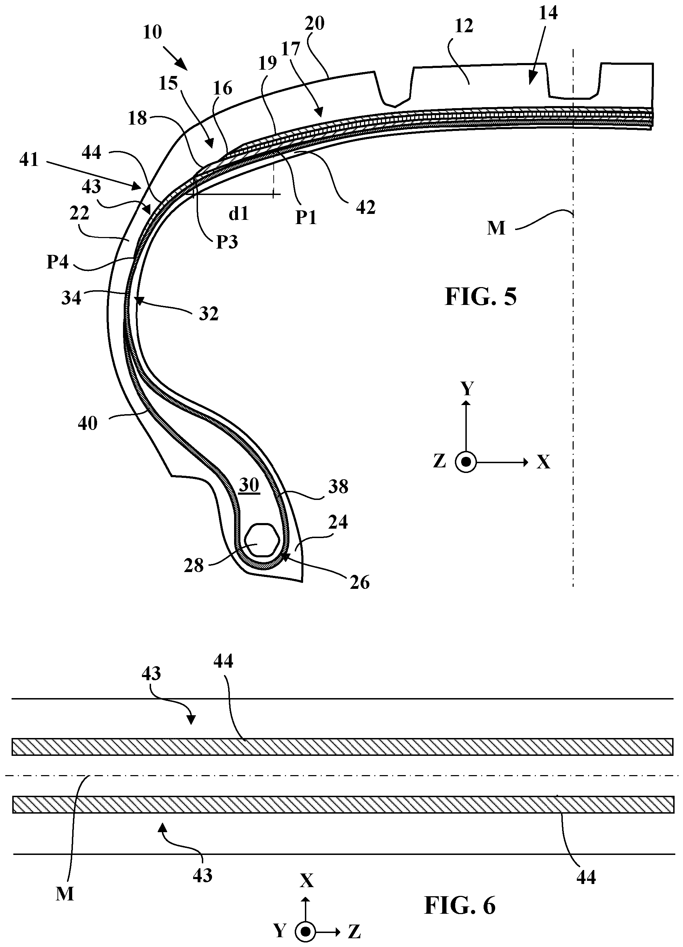

On va maintenant décrire des deuxième, troisième, quatrième, cinquième et sixième modes de réalisation de l'invention respectivement en référence aux figures 5, 6 et 7, 8 et 9, 10 et 11, 12 et 13, 14 . Les éléments analogues à ceux décrits dans le mode de réalisation précédent sont désignés par des références identiques.

A la différence du pneumatique selon le premier mode de réalisation, le pneumatique selon le deuxième mode de réalisation des figures 5 et 6 est tel la distance radiale d2 entre l'extrémité radialement intérieure P2 du tricot 44 et le plan radialement médian P4 de la structure annulaire 26 du bourrelet 24 est supérieure à 15 mm.

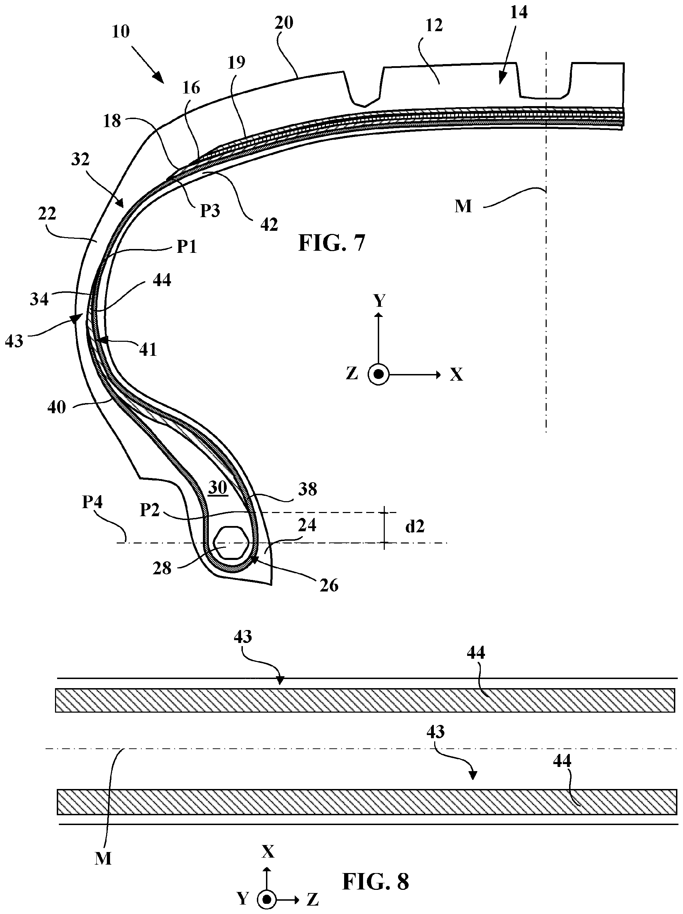

A la différence du pneumatique selon le premier mode de réalisation, le pneumatique selon le troisième mode de réalisation des figures 7 et 8, qui n'est pas selon l'invention, est tel que l'extrémité radialement extérieure P1 du tricot 44 est axialement extérieure par rapport à l'extrémité axialement extérieure P3 de la nappe de sommet 18 radialement adjacente au tricot 44.

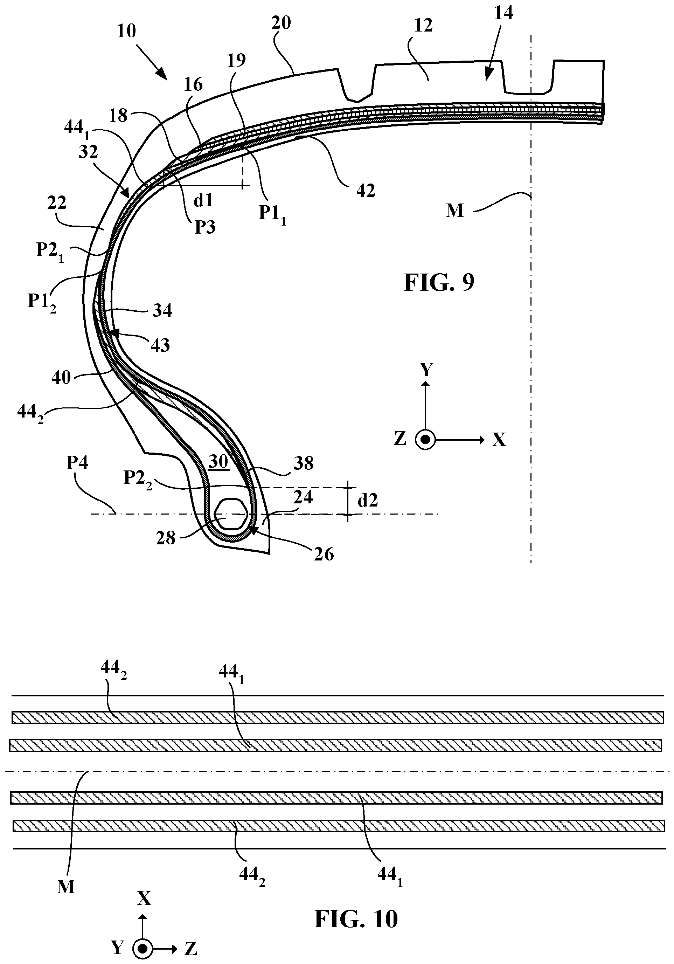

Le pneumatique selon le quatrième mode de réalisation des figures 9 et 10 comprend deux tricots 44₁ et 44₂, en l'espèce les tricots 44 respectivement des deuxième et troisième modes de réalisation. Chaque tricot 44₁ et 44₂ comprend une extrémité radialement extérieure respectivement notée P1₁ et P1₂ et une extrémité radialement intérieure respectivement notée P2₁ et P2₂.

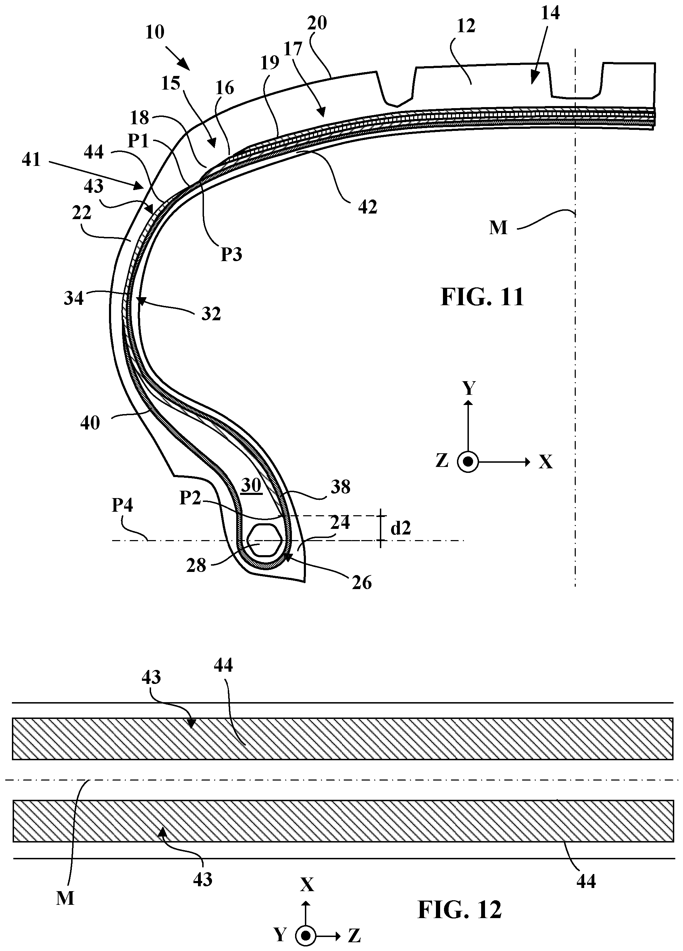

A la différence du pneumatique selon le premier mode de réalisation, le pneumatique selon le cinquième mode de réalisation des figures 11 et 12, qui n'est pas selon l'invention, est tel que l'extrémité radialement extérieure P1 du tricot 44 est axialement externe par rapport à l'extrémité axialement extérieure P3 de la nappe de sommet 18 radialement adjacente au tricot 44.

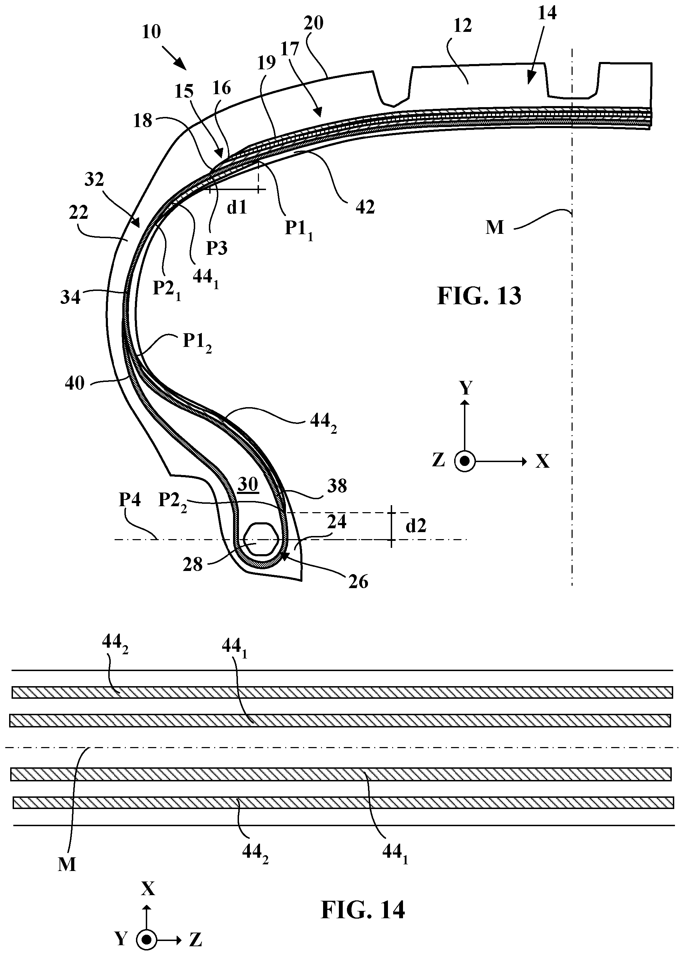

A la différence du pneumatique selon le quatrième mode de réalisation des figures 9 et 10, le pneumatique du sixième mode de réalisation des figures 13 et 14 comprend deux tricots 44₁, 44₂, en l'espèce les tricots 44 respectivement des deuxième et troisième modes de réalisation, agencés axialement à l'intérieur de l'armature de carcasse 32.

### TESTS COMPARATIFS

On a comparé trois pneumatiques 10₁, 10₂ et 10₃ selon l'invention et trois pneumatiques T1, T2 et T3 de l'état de la technique. Chaque pneumatique 10₁, 10₂ et 10₃, conforme à l'invention, présente une architecture identique à celle du pneumatique selon le premier mode de réalisation et comprend un tricot constitué d'un ou de plusieurs éléments filaires d'un matériau non élastomérique, en l'occurrence du nylon.

Les caractéristiques des tricots utilisés sont décrites dans le tableau 1 (propriétés relatives à la force maximale, à l'allongement à la rupture, à l'allongement à 10%, 50% et 100% obtenues en appliquant la norme ISO 13934-1:2013 au tricot noyé dans la matrice d'élastomère standard) et le tableau 2 (propriétés relatives à la densité surfacique de mailles selon la norme NF EN 14971 de 2006) ci-dessous.

**Tableau 1**

| **Pneumatique** | **10₁** | **10₂** | **10₃** |
|---|---|---|---|
| **Nature du brin** | N140/2 | N94/2 | N140/2 |
| **Contexture du tricot** | Jersey | Jersey piqué | Côte interlockée |

| **Direction principale X1** | | | |
|---|---|---|---|
| **Force maximale (N)** | 3002 | 1869 | 4840 |
| **Allongement à la rupture (%)** | 250 | 129 | 485 |
| **Force à 100% d'allongement** | 1444 | 1535 | 1413 |
| **Force à 50% d'allongement** | 903 | 835 | 1112 |
| **Force à 10% d'allongement** | 318 | 308 | 530 |

| **Direction transverse Z1** | | | |
|---|---|---|---|
| **Force maximale (N)** | 1380 | 1451 | 2905 |
| **Allongement à la rupture (%)** | 228 | 225 | 306 |
| **Force à 100% d'allongement** | 804 | 820 | 1265 |
| **Force à 50% d'allongement** | 515 | 435 | 890 |
| **Force à 10% d'allongement** | 176 | 127 | 345 |

**Tableau 2**

| **Pneumatique** | **10₁** | **10₂** | **10₃** |
|---|---|---|---|
| **Nature du brin** | N140/2 | N94/2 | N140/2 |
| **Contexture du tricot** | Jersey | Jersey piqué | Côte interlockée |
| **Méthode utilisée dans la norme NF EN 14971** | B | B | B |
| **Face de mesurage** | Endroit technique | Endroit technique | Endroit technique |
| **Moyenne des résultats individuels (colonne/cm)** | 4,1 | 3 | 3,6 |
| **Moyenne des résultats individuels (rangée/cm)** | 6,4 | 5 | 5,7 |
| **Densité surfacique (maille/cm²)** | 26 | 15 | 21 |

Le pneumatique T1 est identique aux pneumatiques 10₁, 10₂ et 10₃ à l'exception qu'il est dépourvu de tricot. Le pneumatique T2 comprend, en plus des éléments du pneumatique T1, une deuxième nappe de carcasse. Le pneumatique T3 est identique au pneumatique T1 à l'exception que ses flancs présentent une épaisseur supérieure de 10 mm par rapport à celle des flancs du pneumatique T1.

On a soumis les différents pneumatiques T1 à T3, 10₁, 10₂ et 10₃ à un test de poussée de dérive Dz et à un test de résistance au roulement décrits ci-dessous. On a également mesuré la masse de chaque pneumatique T1 à T3, 10₁, 10₂ et 10₃.

Les résultats relatifs à la poussée de dérive et à la masse sont donnés en base 100 par rapport au pneumatique T1. Ainsi, pour la poussée de dérive Dz, plus la valeur est supérieure à 100, meilleure est la poussée de dérive du pneumatique testé par rapport au pneumatique T1. Pour la masse, plus la valeur est inférieure à 100, plus lourd est le pneumatique testé par rapport au pneumatique T1.

Les résultats relatifs à la résistance au roulement sont donnés en base 100 par rapport au pneumatique T3. Plus la valeur est inférieure à 100, plus élevée est la résistance au roulement. Evidemment, on cherche à avoir la résistance au roulement la plus faible possible.

Pour mesurer la poussée de dérive Dz, on a fait rouler chaque pneumatique à une vitesse constante de 80 km/h sur une machine automatique appropriée (machine type "sol-plan" commercialisée par la société MTS), en faisant varier la charge notée "Z", sous un angle de dérive relativement élevé de 8 degrés, et on a mesuré de manière continue la poussée de dérive et identifié la rigidité de dérive notée « D » (corrigée de la poussée à dérive nulle), en enregistrant à l'aide de capteurs l'effort transversal sur la roue en fonction de cette charge Z ; on obtient ainsi la rigidité de dérive. On obtient alors, pour une charge choisie, ici 482 daN, la valeur reportée Dz.

La résistance au roulement a été mesurée sur un volant, selon la méthode ISO 87-67 (1992).

On a rassemblé les résultats de ces tests dans le tableau 3 ci-dessous.

**Tableau 3**

| | **T1** | **T2** | **T3** | **10₁** | **10₂** | **10₃** |
|---|---|---|---|---|---|---|
| **Poids (base 100)** | 100 | 93 | 81 | 97 | 96 | 96 |
| **Dz (base 100)** | 100 | 101 | 108 | 104 | 105 | 104 |
| **Résistance au roulement (base 100)** | / | / | 100 | 99 | 102 | 101 |

On note que les pneumatiques 10₁, 10₂ et 10₃ selon l'invention présentent une masse relativement proche de celle du pneumatique T1 et en tout cas, inférieure à celle du pneumatique T2 et surtout celle du pneumatique T3. En outre, on note que les pneumatiques 10₁, 10₂ et 10₃ selon l'invention présentent une rigidité de dérive Dz supérieure à celles des pneumatiques T1 et T2. Ainsi, les pneumatiques 10₁, 10₂ et 10₃ selon l'invention présentent le meilleur compromis entre masse et rigidité de dérive. Par ailleurs, les pneumatiques 10₁, 10₂ et 10₃ selon l'invention présentent une résistance au roulement contenue et même améliorée (pour les pneumatiques 10₂ et 10₃) par rapport au pneumatique T3.

L'invention ne se limite pas aux modes de réalisation décrits ci-dessus sans sortir du cadre défini par les revendications ci-jointes.

Le tricot pourra être agencé à d'autres postes du pneumatique que ceux décrits ci-dessus, par exemple dans l'armature de sommet, radialement extérieur aux nappes de travail ou bien en zone basse, par exemple dans le bourrelet.

On pourra également combiner les caractéristiques des différents modes de réalisation décrits ou envisagés ci-dessus sous réserve que celles-ci soient compatibles entre elles.

## Revendications

1. Pneumatique (10) comprenant une armature de carcasse (32) ancrée dans deux bourrelets (24) et surmontée radialement par une armature de sommet (14) elle-même surmontée d'une bande de roulement (20) qui est réunie aux bourrelets par deux flancs (22), comprenant au moins un tricot (44) comprenant :
- des colonnes (C1, C2, C3, C4) de boucles (B), les boucles (B) d'une même colonne (C1, C2, C3, C4) étant agencées les unes à la suite des autres sensiblement selon une direction générale (X1) dite principale,
- des rangées (R1, R2, R3, R4) de boucles, les boucles (B) d'une même rangée (R1, R2, R3, R4) étant agencées les unes à côtés des autres sensiblement selon une direction générale (Z1) dite transverse, ledit pneumatique étant **caractérisé par** le tricot (44) présentant, selon la direction générale principale (X1) et/ou la direction générale transverse (Z1), une force à 100 % d'allongement supérieure ou égale à 250 N, la force à 100% d'allongement étant déterminée à partir d'une courbe force-allongement obtenue en appliquant la norme ISO 13934-1:2013 au tricot (44) noyé dans une matrice d'élastomère standard ;
la matrice d'élastomère standard est une composition présentant un module apparent MA100 à 100% d'allongement, mesuré selon la norme ASTM D412-1998, éprouvette « C », égal à 1,6 MPa ± 0,2 MPa,
ledit tricot (44) étant positionné dans chaque flanc (22),
l'extrémité radialement extérieure (P1) du tricot (44) étant axialement intérieure par rapport à l'extrémité axialement extérieure (P3) d'une nappe de sommet (18) radialement adjacente au tricot (44).

2. Pneumatique (10) selon la revendication précédente, dans lequel le tricot (44) présente, selon la direction générale principale (X1) et/ou la direction générale transverse (Z1), une force à 50% d'allongement supérieure ou égale à 170 N, de préférence 300 N, la force à 50% d'allongement étant déterminée à partir d'une courbe force-allongement obtenue en appliquant la norme ISO 13934-1:2013 au tricot (44) noyé dans la matrice d'élastomère standard.

3. Pneumatique (10) selon l'une quelconque des revendications précédentes, dans lequel le tricot (44) présente, selon la direction générale principale (X1) et/ou la direction générale transverse (Z1), une force maximale supérieure ou égale à 800 N, la force maximale étant mesurée selon la norme ISO 13934-1:2013 au tricot (44) noyé dans la matrice d'élastomère standard.

4. Pneumatique (10) selon l'une quelconque des revendications précédentes, dans lequel le tricot (44) présente, selon la direction générale principale (X1) et/ou la direction générale transverse (Z1), un allongement à la rupture supérieur ou égal à 30%, de préférence 100 %, l'allongement à la rupture étant mesuré selon la norme ISO 13934-1:2013 au tricot (44) noyé dans la matrice d'élastomère standard.

5. Pneumatique (10) selon l'une quelconque des revendications précédentes, dans lequel le tricot (44) présente, selon la direction générale principale (X1) et/ou la direction générale transverse (Z1), un allongement à la rupture inférieur ou égal à 550 %, de préférence 500 %, l'allongement à la rupture étant mesuré selon la norme ISO 13934-1:2013 appliquée au tricot (44) noyé dans la matrice d'élastomère standard.

6. Pneumatique (10) selon l'une quelconque des revendications 1 à 5, dans lequel le tricot (44) présente, selon la direction générale principale (X1) et/ou la direction générale transverse (Z1), une force à 100% d'allongement supérieure ou égale à 300 N, de préférence 400 N et plus préférentiellement 500 N, la force à 100% d'allongement étant déterminée à partir d'une courbe force-allongement obtenue en appliquant la norme ISO 13934-1:2013 au tricot (44) noyé dans la matrice d'élastomère standard.

7. Pneumatique (10) selon l'une quelconque des revendications 1 à 5, dans lequel :
- la force à 100 % d'allongement du tricot (44) selon la direction principale (X1), déterminée à partir d'une courbe force-allongement obtenue en appliquant la norme ISO 13934-1:2013 au tricot (44) noyé dans la matrice d'élastomère standard, est supérieure ou égale à 250 N, de préférence 700 N et plus préférentiellement 1000 N, et
- la force à 100 % d'allongement du tricot (44) selon la direction transverse (Z1), déterminée à partir d'une courbe force-allongement obtenue en appliquant la norme ISO 13934-1:2013 au tricot (44) noyé dans la matrice d'élastomère standard, est supérieure ou égale à 120 N, de préférence 500 N.

8. Pneumatique (10) selon l'une quelconque des revendications précédentes, dans lequel :
- la force à 50 % d'allongement du tricot (44) selon la direction principale (X1), déterminée à partir d'une courbe force-allongement obtenue en appliquant la norme ISO 13934-1:2013 au tricot (44) noyé dans la matrice d'élastomère standard, est supérieure ou égale à 170 N, de préférence 500 N, et
- la force à 50 % d'allongement du tricot (44) selon la direction transverse (Z1), déterminée à partir d'une courbe force-allongement obtenue en appliquant la norme ISO 13934-1:2013 au tricot (44) noyé dans la matrice d'élastomère standard, est supérieure ou égale à 80 N, de préférence 300 N.

9. Pneumatique (10) selon l'une quelconque des revendications précédentes, dans lequel :
- l'allongement à la rupture du tricot (44) selon la direction principale (X1) mesuré selon la norme ISO 13934-1:2013 appliquée au tricot (44) noyé dans la matrice d'élastomère standard est inférieur ou égal à 550 %, de préférence 500 %, et
- l'allongement à la rupture du tricot (44) selon la direction transverse (Z1) mesuré selon la norme ISO 13934-1:2013 appliquée au tricot (44) noyé dans la matrice d'élastomère standard est inférieur ou égal à 1000 %, de préférence 320 %.

10. Pneumatique (10) selon l'une quelconque des revendications précédentes, dans lequel :
- l'allongement à la rupture du tricot (44) selon la direction principale (X1) mesuré selon la norme ISO 13934-1:2013 appliquée au tricot (44) noyé dans la matrice d'élastomère standard est supérieur ou égal à 100 %, et
- l'allongement à la rupture du tricot (44) selon la direction transverse (Z1) mesuré selon la norme ISO 13934-1:2013 appliquée au tricot (44) noyé dans la matrice d'élastomère standard est supérieur ou égal à 160 %.

11. Pneumatique (10) selon l'une quelconque des revendications précédentes, dans lequel :
- la force maximale du tricot (44) selon la direction principale (X1) mesurée selon la norme ISO 13934-1:2013 appliquée au tricot (44) noyé dans la matrice d'élastomère standard est supérieure ou égale à 1800 N, et
- la force maximale du tricot (44) selon la direction transverse (Z1) mesurée selon la norme ISO 13934-1:2013 appliquée au tricot (44) noyé dans la matrice d'élastomère standard est supérieure ou égale à 800 N.

12. Pneumatique (10) selon l'une quelconque des revendications précédentes, dans lequel l'extrémité radialement extérieure (P1) du tricot (44) est radialement intercalée entre l'armature de carcasse (32) et l'armature de sommet (14).

13. Utilisation d'un tricot (44) comprenant :
- des colonnes (C1, C2, C3, C4) de boucles (B), les boucles (B) d'une même colonne (C1, C2, C3, C4) étant agencées les unes à la suite des autres sensiblement selon une direction générale (X1) dite principale,
- des rangées (R1, R2, R3, R4) de boucles, les boucles (B) d'une même rangée (R1, R2, R3, R4) étant agencées les unes à côtés des autres sensiblement selon une direction générale (Z1) dite transverse,
le tricot (44) présentant, selon la direction générale principale (X1) et/ou la direction générale transverse (Z1), une force à 100 % d'allongement supérieure ou égale à 250 N, la force à 100% d'allongement étant déterminée à partir d'une courbe force-allongement obtenue en appliquant la norme ISO 13934-1:2013 au tricot (44) noyé dans une matrice d'élastomère standard en tant qu'élément de renfort d'un pneumatique (10) comprenant une armature de carcasse (32) ancrée dans deux bourrelets (24) et surmontée radialement par une armature de sommet (14) elle-même surmontée d'une bande de roulement (20) qui est réunie aux bourrelets par deux flancs (22), la matrice d'élastomère standard est une composition présentant un module apparent MA100 à 100% d'allongement, mesuré selon la norme ASTM D412-1998, éprouvette « C », égal à 1,6 MPa ± 0,2 MPa, le tricot (44) étant positionné au niveau de chaque flanc (22), l'extrémité radialement extérieure (P1) dudit l'assemblage (45) étant axialement intérieure par rapport à l'extrémité axialement extérieure (P3) d'une nappe de sommet (18) radialement adjacente audit l'assemblage (45).

14. Procédé de fabrication d'un pneumatique (10) selon l'une quelconque des revendications 1 à 12, dans lequel on noie le tricot (44) dans une matrice d'élastomère.

## Patentansprüche

1. Reifen (10), welcher eine Karkassenbewehrung (32) umfasst, die in zwei Wülsten (24) verankert ist und radial von einer Scheitelbewehrung (14) überlagert wird, die ihrerseits von einem Laufstreifen (20) überlagert wird, welcher mit den Wülsten über zwei Seitenwände (22) vereinigt ist, welcher wenigstens ein Gestrick (44) umfasst, welches umfasst:
- Stäbchen (C1, C2, C3, C4) von Schlaufen (B), wobei die Schlaufen (B) desselben Stäbchens (C1, C2, C3, C4) nacheinander im Wesentlichen in einer allgemeinen Richtung (X1), Hauptrichtung genannt,
angeordnet sind,
- Reihen (R1, R2, R3, R4) von Schlaufen, wobei die Schlaufen (B) derselben Reihe (R1, R2, R3, R4) nebeneinander im Wesentlichen in einer allgemeinen Richtung (Z1), Querrichtung genannt, angeordnet sind,
wobei der Reifen **dadurch gekennzeichnet ist, dass** das Gestrick (44) in der allgemeinen Hauptrichtung (X1) und/oder der allgemeinen Querrichtung (Z1) eine Kraft bei 100 % Dehnung aufweist, die größer oder gleich 250 N ist, wobei die Kraft bei 100 % Dehnung aus einer Kraft-Dehnungs-Kurve bestimmt wird, die durch Anwendung der Norm ISO 13934-1:2013 auf das in eine standardmäßige Elastomermatrix eingebettete Gestrick (44) erhalten wurde,
wobei die standardmäßige Elastomermatrix eine Zusammensetzung ist, die einen scheinbaren Modul MA100 bei 100 % Dehnung, gemessen nach der Norm ASTM D412-1998, Probekörper "C", aufweist, der gleich 1,6 MPa ± 0,2 MPa ist,
wobei das Gestrick (44) in jeder Seitenwand (22) positioniert ist,
wobei das radial äußere Ende (P1) des Gestricks (44) axial innen bezüglich des axial äußeren Endes (P3) einer dem Gestrick (44) radial benachbarten Scheitellage (18) angeordnet ist.

2. Reifen (10) nach dem vorhergehenden Anspruch, wobei das Gestrick (44) in der allgemeinen Hauptrichtung (X1) und/oder der allgemeinen Querrichtung (Z1) eine Kraft bei 50 % Dehnung aufweist, die größer oder gleich 170 N, vorzugsweise 300 N ist, wobei die Kraft bei 50 % Dehnung aus einer Kraft-Dehnungs-Kurve bestimmt wird, die durch Anwendung der Norm ISO 13934-1:2013 auf das in die standardmäßige Elastomermatrix eingebettete Gestrick (44) erhalten wurde.

3. Reifen (10) nach einem der vorhergehenden Ansprüche, wobei das Gestrick (44) in der allgemeinen Hauptrichtung (X1) und/oder der allgemeinen Querrichtung (Z1) eine maximale Kraft aufweist, die größer oder gleich 800 N ist, wobei die maximale Kraft nach der Norm ISO 13934-1:2013 an dem in die standardmäßige Elastomermatrix eingebetteten Gestrick (44) gemessen wird.

4. Reifen (10) nach einem der vorhergehenden Ansprüche, wobei das Gestrick (44) in der allgemeinen Hauptrichtung (X1) und/oder der allgemeinen Querrichtung (Z1) eine Bruchdehnung aufweist, die größer oder gleich 30 %, vorzugsweise 100 % ist, wobei die Bruchdehnung nach der Norm ISO 13934-1:2013 an dem in die standardmäßige Elastomermatrix eingebetteten Gestrick (44) gemessen wird.

5. Reifen (10) nach einem der vorhergehenden Ansprüche, wobei das Gestrick (44) in der allgemeinen Hauptrichtung (X1) und/oder der allgemeinen Querrichtung (Z1) eine Bruchdehnung aufweist, die kleiner oder gleich 550 %, vorzugsweise 500 % ist, wobei die Bruchdehnung nach der Norm ISO 13934-1:2013, angewendet auf das in die standardmäßige Elastomermatrix eingebettete Gestrick (44), gemessen wird.

6. Reifen (10) nach einem der Ansprüche 1 bis 5, wobei das Gestrick (44) in der allgemeinen Hauptrichtung (X1) und/oder der allgemeinen Querrichtung (Z1) eine Kraft bei 100 % Dehnung aufweist, die größer oder gleich 300 N, vorzugsweise 400 N und stärker bevorzugt 500 N ist, wobei die Kraft bei 100 % Dehnung aus einer Kraft-Dehnungs-Kurve bestimmt wird, die durch Anwendung der Norm ISO 13934-1:2013 auf das in die standardmäßige Elastomermatrix eingebettete Gestrick (44) erhalten wurde.

7. Reifen (10) nach einem der Ansprüche 1 bis 5, wobei:
- die Kraft bei 100 % Dehnung des Gestricks (44) in der Hauptrichtung (X1), die aus einer Kraft-Dehnungs-Kurve bestimmt wird, die durch Anwendung der Norm ISO 13934-1:2013 auf das in die standardmäßige Elastomermatrix eingebettete Gestrick (44) erhalten wurde, größer oder gleich 250 N, vorzugsweise 700 N und stärker bevorzugt 1000 N ist, und
- die Kraft bei 100 % Dehnung des Gestricks (44) in der Querrichtung (Z1), die aus einer Kraft-Dehnungs-Kurve bestimmt wird, die durch Anwendung der Norm ISO 13934-1:2013 auf das in die standardmäßige Elastomermatrix eingebettete Gestrick (44) erhalten wurde, größer oder gleich 120 N, vorzugsweise 500 N ist.

8. Reifen (10) nach einem der vorhergehenden Ansprüche, wobei:
- die Kraft bei 50 % Dehnung des Gestricks (44) in der Hauptrichtung (X1), die aus einer Kraft-Dehnungs-Kurve bestimmt wird, die durch Anwendung der Norm ISO 13934-1:2013 auf das in die standardmäßige Elastomermatrix eingebettete Gestrick (44) erhalten wurde, größer oder gleich 170 N, vorzugsweise 500 N ist, und
- die Kraft bei 50 % Dehnung des Gestricks (44) in der Querrichtung (Z1), die aus einer Kraft-Dehnungs-Kurve bestimmt wird, die durch Anwendung der Norm ISO 13934-1:2013 auf das in die standardmäßige Elastomermatrix eingebettete Gestrick (44) erhalten wurde, größer oder gleich 80 N, vorzugsweise 300 N ist.

9. Reifen (10) nach einem der vorhergehenden Ansprüche, wobei:
- die Bruchdehnung des Gestricks (44) in der Hauptrichtung (X1), die nach der Norm ISO 13934-1:2013, angewendet auf das in die standardmäßige Elastomermatrix eingebettete Gestrick (44), gemessen wird, kleiner oder gleich 550 %, vorzugsweise 500 % ist, und
- die Bruchdehnung des Gestricks (44) in der Querrichtung (Z1), die nach der Norm ISO 13934-1:2013, angewendet auf das in die standardmäßige Elastomermatrix eingebettete Gestrick (44), gemessen wird, kleiner oder gleich 1000 %, vorzugsweise 320 % ist.

10. Reifen (10) nach einem der vorhergehenden Ansprüche, wobei:
- die Bruchdehnung des Gestricks (44) in der Hauptrichtung (X1), die nach der Norm ISO 13934-1:2013, angewendet auf das in die standardmäßige Elastomermatrix eingebettete Gestrick (44), gemessen wird, größer oder gleich 100 % ist, und
- die Bruchdehnung des Gestricks (44) in der Querrichtung (Z1), die nach der Norm ISO 13934-1:2013, angewendet auf das in die standardmäßige Elastomermatrix eingebettete Gestrick (44), gemessen wird, größer oder gleich 160 % ist.

11. Reifen (10) nach einem der vorhergehenden Ansprüche, wobei:
- die maximale Kraft des Gestricks (44) in der Hauptrichtung (X1), die nach der Norm ISO 13934-1:2013, angewendet auf das in die standardmäßige Elastomermatrix eingebettete Gestrick (44), gemessen wird, größer oder gleich 1800 N ist, und
- die maximale Kraft des Gestricks (44) in der Querrichtung (Z1), die nach der Norm ISO 13934-1:2013, angewendet auf das in die standardmäßige Elastomermatrix eingebettete Gestrick (44), gemessen wird, größer oder gleich 800 N ist.

12. Reifen (10) nach einem der vorhergehenden Ansprüche, wobei das radial äußere Ende (P1) des Gestricks (44) radial zwischen der Karkassenbewehrung (32) und der Scheitelbewehrung (14) angeordnet ist.

13. Verwendung eines Gestricks (44), welches umfasst:
- Stäbchen (C1, C2, C3, C4) von Schlaufen (B), wobei die Schlaufen (B) desselben Stäbchens (C1, C2, C3, C4) nacheinander im Wesentlichen in einer allgemeinen Richtung (X1), Hauptrichtung genannt, angeordnet sind,
- Reihen (R1, R2, R3, R4) von Schlaufen, wobei die Schlaufen (B) derselben Reihe (R1, R2, R3, R4) nebeneinander im Wesentlichen in einer allgemeinen Richtung (Z1), Querrichtung genannt, angeordnet sind,
wobei das Gestrick (44) in der allgemeinen Hauptrichtung (X1) und/oder der allgemeinen Querrichtung (Z1) eine Kraft bei 100 % Dehnung aufweist, die größer oder gleich 250 N ist, wobei die Kraft bei 100 % Dehnung aus einer Kraft-Dehnungs-Kurve bestimmt wird, die durch Anwendung der Norm ISO 13934-1:2013 auf das in eine standardmäßige Elastomermatrix eingebettete Gestrick (44) erhalten wurde, als Festigkeitsträger eines Reifens (10), welcher eine Karkassenbewehrung (32) umfasst, die in zwei Wülsten (24) verankert ist und radial von einer Scheitelbewehrung (14) überlagert wird, die ihrerseits von einem Laufstreifen (20) überlagert wird, welcher mit den Wülsten über zwei Seitenwände (22) vereinigt ist, wobei die standardmäßige Elastomermatrix eine Zusammensetzung ist, die einen scheinbaren Modul MA100 bei 100 % Dehnung, gemessen nach der Norm ASTM D412-1998, Probekörper "C", aufweist, der gleich 1,6 MPa ± 0,2 MPa ist, wobei das Gestrick (44) an jeder Seitenwand (22) positioniert ist, wobei das radial äußere Ende (P1) der Anordnung (45) axial innen bezüglich des axial äußeren Endes (P3) einer der Anordnung (45) radial benachbarten Scheitellage (18) angeordnet ist.

14. Verfahren zur Herstellung eines Reifens (10) nach einem der Ansprüche 1 bis 12, wobei das Gestrick (44) in eine Elastomermatrix eingebettet wird.

## Claims

1. Tyre (10), comprising a carcass reinforcement (32) anchored in two beads (24) and surmounted radially by a crown reinforcement (14) itself surmounted by a tread (20) which is connected to the beads by two sidewalls (22),
comprising at least one knit (44) comprising:
- columns (C1, C2, C3, C4) of loops (B), the loops (B) of one and the same column (C1, C2, C3, C4) being arranged one after the other substantially in an overall direction (X1) referred to as the main direction,
- rows (R1, R2, R3, R4) of loops, the loops (B) of one and the same row (R1, R2, R3, R4) being arranged one beside the other substantially in an overall direction (Z1) referred to as the transverse direction,
said tyre being **characterized by** the knit (44) having, in the main overall direction (X1) and/or the transverse overall direction (Z1), a force at 100% elongation greater than or equal to 250 N, the force at 100% elongation being determined from a force-elongation curve obtained by applying standard ISO 13934-1:2013 to the knit (44) embedded in a standard elastomer matrix:
the standard elastomer matrix is a composition that has an apparent modulus MA100 at 100% elongation, measured in accordance with standard ASTM D412-1998, test specimen "C", equal to 1.6MPa ± 0.2 MPa, said knit (44) being positioned in each sidewall (22), the radially outer end (P1) of the knit (44) being axially on the inside with respect to the axially outer end (P3) of a crown ply (18) radially adjacent to the knit (44).

2. Tyre (10) according to the preceding claim, in which the knit (44) has, in the main overall direction (X1) and/or the transverse overall direction (Z1), a force at 50% elongation greater than or equal to 170 N, preferably 300 N, the force at 50% elongation being determined from a force-elongation curve obtained by applying standard ISO 13934-1:2013 to the knit (44) embedded in the standard elastomer matrix.

3. Tyre (10) according to either one of the preceding claims, in which the knit (44) has, in the main overall direction (X1) and/or the transverse overall direction (Z1), a maximum force greater than or equal to 800 N, the maximum force being measured in accordance with standard ISO 13934-1:2013 applied to the knit (44) embedded in the standard elastomer matrix.

4. Tyre (10) according to any one of the preceding claims, in which the knit (44) has, in the main overall direction (X1) and/or the transverse overall direction (Z1), an elongation at break greater than or equal to 30%, preferably 100%, the elongation at break being measured in accordance with standard ISO 13934-1:2013 applied to the knit (44) embedded in the standard elastomer matrix.

5. Tyre (10) according to any one of the preceding claims, in which the knit (44) has, in the main overall direction (X1) and/or the transverse overall direction (Z1), an elongation at break less than or equal to 550%, preferably 500%, the elongation at break being measured in accordance with standard ISO 13934-1:2013 applied to the knit (44) embedded in the standard elastomer matrix.

6. Tyre (10) according to any one of Claims 1 to 5, in which the knit (44) has, in the main overall direction (X1) and/or the transverse overall direction (Z1), a force at 100% elongation that is greater than or equal to 300 N, preferably 400 N and more preferably 500 N, the force at 100% elongation being determined from a force-elongation curve obtained by applying standard ISO 13934-1:2013 to the knit (44) embedded in the standard elastomer matrix.

7. Tyre (10) according to any one of Claims 1 to 5, in which :
- the force at 100% elongation of the knit (44) in the main direction (X1), determined from a force-elongation curve obtained by applying standard ISO 13934-1:2013 to the knit (44) embedded in the standard elastomer matrix, is greater than or equal to 250 N, preferably 700 N and more preferably 1000 N, and
- the force at 100% elongation of the knit (44) in the transverse direction (Z1), determined from a force-elongation curve obtained by applying standard ISO 13934-1:2013 to the knit (44) embedded in the standard elastomer matrix, is greater than or equal to 120 N, preferably 500 N.

8. Tyre (10) according to any one of the preceding claims, in which:
- the force at 50% elongation of the knit (44) in the main direction (X1), determined from a force-elongation curve obtained by applying standard ISO 13934-1:2013 to the knit (44) embedded in the standard elastomer matrix, is greater than or equal to 170 N, preferably 500 N, and
- the force at 50% elongation of the knit (44) in the transverse direction (Z1), determined from a force-elongation curve obtained by applying standard ISO 13934-1:2013 to the knit (44) embedded in the standard elastomer matrix, is greater than or equal to 80 N, preferably 300 N.

9. Tyre (10) according to any one of the preceding claims, in which:
- the elongation at break of the knit (44) in the main direction (X1) measured in accordance with standard ISO 13934-1:2013 applied to the knit (44) embedded in the standard elastomer matrix is less than or equal to 550%, preferably 500%, and
- the elongation at break of the knit (44) in the transverse direction (Z1) measured in accordance with standard ISO 13934-1:2013 applied to the knit (44) embedded in the standard elastomer matrix is less than or equal to 1000%, preferably 320%.

10. Tyre (10) according to any one of the preceding claims, in which:
- the elongation at break of the knit (44) in the main direction (X1) measured in accordance with standard ISO 13934-1:2013 applied to the knit (44) embedded in the standard elastomer matrix is greater than or equal to 100%, and
- the elongation at break of the knit (44) in the transverse direction (Z1) measured in accordance with standard ISO 13934-1:2013 applied to the knit (44) embedded in the standard elastomer matrix is greater than or equal to 160%.

11. Tyre (10) according to any one of the preceding claims, in which:
- the maximum force of the knit (44) in the main direction (X1) measured in accordance with standard ISO 13934-1:2013 applied to the knit (44) embedded in the standard elastomer matrix is greater than or equal to 1800 N, and
- the maximum force of the knit (44) in the transverse direction (Z1) measured in accordance with standard ISO 13934-1:2013 applied to the knit (44) embedded in the standard elastomer matrix is greater than or equal to 800 N.

12. Tyre (10) according to any one of the preceding claims, in which the radially outer end (P1) of the knit (44) is interposed radially between the carcass reinforcement (32) and the crown reinforcement (14).

13. Use of a knit (44) comprising :
- columns (C1, C2, C3, C4) of loops (B), the loops (B) of one and the same column (C1, C2, C3, C4) being arranged one after the other substantially in an overall direction (X1) referred to as the main direction,
- rows (R1, R2, R3, R4) of loops, the loops (B) of one and the same row (R1, R2, R3, R4) being arranged one beside the other substantially in an overall direction (Z1) referred to as the transverse direction, the knit (44) having, in the main overall direction (X1) and/or the transverse overall direction (Z1), a force at 100% elongation greater than or equal to 250 N, the force at 100% elongation being determined from a force-elongation curve obtained by applying standard ISO 13934-1:2013 to the knit (44) embedded in a standard elastomer matrix by way of reinforcing element for a tyre (10), comprising a carcass reinforcement (32) anchored in two beads (24) and surmounted radially by a crown reinforcement (14) itself surmounted by a tread (20) which is connected to the beads by two sidewalls (22), the knit (44) being positioned at each side wall (22), the standard elastomer matrix is a composition that has an apparent modulus MA100 at 100% elongation, measured in accordance with standard ASTM D412-1998, test specimen "C", equal to 1.6 MPa ± 0.2 MPa,
said knit (44) being positioned in each sidewall (22), the knit (44) being positioned at each sidewall (22), the radially outer end (P1) of the knit (44) of said assembly (45) being axially on the inside with respect to the axially outer end (P3) of a crown ply (18) radially adjacent to said assembly (45).

14. Method of manufacturing a tyre (10) according to any one of Claims 1 to 12, in which the knit (44) is embedded in an elastomer matrix.
